# EUROPEAN PATENT SPECIFICATION

(11) **EP 4 163 018 B1**
(45) Date of publication and mention of the grant of the patent: **30.07.2025**
(21) Application number: 22200005.1
(22) Date of filing: 06.10.2022
(51) Int. Cl.: B06B 1/02, A24F 40/00

(54) **METHOD AND SYSTEM FOR CONTROLLING LINEAR MOTOR OF ELECTRONIC ATOMIZER, AND ELECTRONIC ATOMIZER**
VERFAHREN UND SYSTEM ZUR STEUERUNG EINES LINEARMOTORS EINES ELEKTRONISCHEN ZERSTÄUBERS UND ELEKTRONISCHER ZERSTÄUBER
PROCÉDÉ ET SYSTÈME DE COMMANDE DE MOTEUR LINÉAIRE D'ATOMISEUR ÉLECTRONIQUE, ET ATOMISEUR ÉLECTRONIQUE

(30) Priority: 11.10.2021 CN 202111182811
(43) Date of publication of application: 12.04.2023
(73) Proprietor: Shenzhen Smoore Technology Limited, Shenzhen, Guangdong 518102 (CN)
(72) Inventor: ZHOU, Yaoguo, Shenzhen (CN)
(74) Representative: Michalski Hüttermann & Partner Patentanwälte mbB

(56) References cited:
- CN-A- 112 269 895
- US-A1- 2015 020 825
- JIANG ZHI-XIONG ET AL: "Design and Analysis of Novel Low-Cost Linear Vibration Motor for an Electronic Cigarette", APPLIED SCIENCES, vol. 10, no. 24, 14 December 2020 (2020-12-14), pages 8915, XP093019059, DOI: 10.3390/app10248915

## Description

### TECHNICAL FIELD

The present application relates to the technical field of signal processing, and in particular, to a method and system for controlling a linear motor of an electronic atomizer, and an electronic atomizer.

### BACKGROUND

An electronic atomizer may control a linear motor through output of a driving chip to achieve a better motor vibration effect. In the current market, a real-time transport protocol (RTP) mode is used in almost all electronic products with linear motors. That is, after waveform data is written into the driving chip in real time, the driving chip outputs motor vibration in real time and can output any form of vibration waveforms. However, more hardware resources are generally required in the RTP mode. Electronic atomizer products have few hardware resources, which is not applicable to the RTP mode. Therefore, a random access memory (RAM) mode is more suitable for the electronic atomizer. However, due to limited hardware resources of the electronic atomizer, only simple waveforms instead of rich vibration waveforms can be generated in the RAM mode, causing vibration feedback of the electronic atomizer products to be in a relatively simple form.

During the implementation, the inventor finds that the conventional art has at least the following problem. The existing electronic atomizer uses the RAM mode to drive the linear motor to vibrate, leading to a limited effect of a vibration waveform of the motor.

The patent application No. US 2015/020825A1 discloses an electronic smoking article with haptic feedback for providing an indication of a status of the electronic smoking article to a user. Different waveforms may be predetermined to correspond to a specific status of the device, and the user may identify the status based upon the waveform that is generated.

The patent application No. CN112269895A discloses a vibration control method, device, and computer readable storage medium. Electronic devices with different motor configurations can output the same vibration waveform for the same audio, improve the consistency of the vibration sense.

In addition, a novel low-cost linear vibration motor for an electronic cigarette is also provide by JIANG ZHI-XIONG ET AL IN "Design and Analysis of Novel Low-Cost Linear Vibration Motor for an Electronic Cigarette", APPLIED SCIENCES, vol. 10, no.24, 14 December 2020 (2020-12-14), page 8915.

### SUMMARY

Based on the above, there is a need to provide a method and system for controlling a linear motor of an electronic atomizer, and an electronic atomizer with respect to the above technical problem.

In a first aspect, a method for controlling a linear motor of an electronic atomizer is provided. The method includes: initializing a driving module of the electronic atomizer, and writing vibration waveform data into a static random access memory, SRAM, of the driving module to generate pre-stored vibration waveform data; initializing a register of the driving module, in an event that a vibration event of the electronic atomizer occurs at present, where the vibration event of the electronic atomizer is an event that requires feedback vibration of the electronic atomizer, and where different vibration events are triggered to provide different vibration modes; selecting, from the pre-stored vibration waveform data, a basic waveform matching a current vibration mode, configuring the basic waveform in the register; adjusting, according to a gain rule corresponding to a current vibration mode, the gain of a basic waveform, and obtaining a vibration waveform called by the driving module of the electronic atomizer to drive a linear motor of the electronic atomizer to vibrate. The gain is used for adjusting a vibration amplitude of the linear motor.

In one embodiment, the vibration waveform data is RAM mode vibration waveform data. The gain rule includes periodically changing the gain of the basic waveform.

In one embodiment, the gain does not exceed 128 dB; and/or a cycle during which the gain of the basic waveform is changed ranges from 10 ms to 30 ms.

In a further aspect, a system for controlling a linear motor of an electronic atomizer is provided as defined in independent claim 5.

In a further aspect, an electronic atomizer is provided as defined in claim 6.

In a further aspect, a computer-readable storage medium storing a computer program is provided as defined in independent claim 7.

One of the above technical solutions has at least the following advantages and beneficial effects.

In the present application, according to the gain rule corresponding to a current vibration mode, the gain of a basic waveform selected from pre-stored vibration waveform data that matches the current vibration mode can be adjusted, so as to adjust a vibration amplitude of the linear motor and obtain a vibration waveform called by the driving module of the electronic atomizer to drive the linear motor of the electronic atomizer to vibrate. In the present application, different matched basic waveforms can be provided according to different current vibration modes, and the gain of a basic waveform can be adjusted according to the gain rule corresponding to a current vibration mode, so as to provide rich vibration waveforms for the motor of the electronic atomizer. Moreover, the present application is no longer limited by the number of registers of the driving module, and can achieve rich vibration waveforms only with one register of the driving module, which requires fewer hardware resources, saves resources, has high practicability, and enhances user experience.

### BRIEF DESCRIPTION OF THE DRAWINGS

In order to more clearly illustrate the technical solutions in embodiments of the present application or the conventional art, the accompanying drawings used in the description of the embodiments or the conventional art will be briefly introduced below. It is apparent that, the accompanying drawings in the following description are only some embodiments of the present application, and other drawings can be obtained by those of ordinary skill in the art from the provided drawings without creative efforts
FIG. 1 is a first schematic flowchart of a method for controlling a linear motor of an electronic atomizer according to an embodiment.
FIG. 2 is a second schematic flowchart of the electronic atomizer linear motor control method according to an embodiment.
FIG. 3 is a third schematic flowchart of the electronic atomizer linear motor control method according to an embodiment.
FIG. 4 is a block diagram illustrating a first configuration of a system for controlling a linear motor of an electronic atomizer according to an embodiment.
FIG. 5 is a block diagram illustrating a second configuration of a system for controlling a linear motor of an electronic atomizer according to an embodiment.
FIG. 6 is a schematic workflow of the electronic atomizer linear motor control system according to an embodiment.
FIG. 7 is a block diagram illustrating a configuration of an electronic atomizer according to an embodiment.

### DETAILED DESCRIPTION OF THE EMBODIMENTS

For easy understanding of the present application, a more comprehensive description of the present application is given below with reference to the accompanying drawings. Preferred implementations of the present application are given in the accompanying drawings. However, the present application may be implemented in many different forms and is not limited to the implementations described herein. On the contrary, these embodiments are provided to understand the disclosed content of the present application more thoroughly and comprehensively.

Unless defined otherwise, all technical and scientific terms used herein have the same meanings as would generally understood by those skilled in the technical field of the present application. The terms used herein in the specification of the present application are for the purpose of describing specific embodiments only, and are not intended to limit the present application.

It may be understood that the terms such as "first" and "second" used in the present application may be used herein to describe various elements, but the elements are not limited by the terms. The terms are intended only to distinguish one element from another element.

It is to be noted that when an element is referred to as being "connected to" another element, the element may be directly connected to the another element or connected to the another element via an intermediate element. In addition, "connection" in the following embodiments should be understood as "electrical connection", "communication connection", etc., if electrical signals or data are transmitted between connected objects.

In use, the singular forms of "a/an", "one", and "the" may also include plural forms, unless otherwise clearly specified in the context. It should be further understood that the terms "include/comprise" and/or "have" specify the presence of the features, integers, steps, operations, components, portions, or combinations thereof, but may not exclude the presence or addition of one or more of other features, integers, steps, operations, components, portions, or combination thereof. At the same time, the term "and/or" used in the specification may include any and all combinations of related listed items.

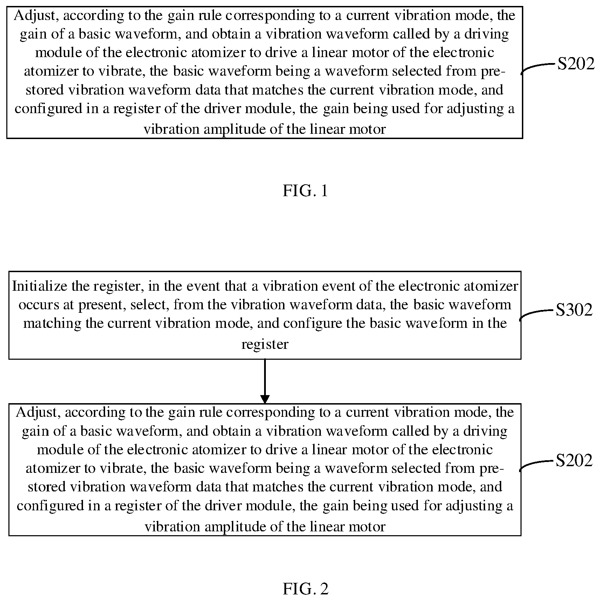

According to the invention, as shown in FIG. 1, a method for controlling a linear motor of an electronic atomizer is provided. The method includes the following steps.

In step 202, the gain of a basic waveform is adjusted according to the gain rule corresponding to a current vibration mode, and a vibration waveform called by a driving module of the electronic atomizer is obtained to drive a linear motor of the electronic atomizer to vibrate.

The basic waveform is a waveform selected from pre-stored vibration waveform data that matches the current vibration mode, and configured in a register of the driving module. The gain is used for adjusting a vibration amplitude of the linear motor.

Specifically, during daily use of the electronic atomizer, the electronic atomizer may be operated correspondingly to trigger vibration feedback of the electronic atomizer, so that people can more intuitively grasp use feedback of the electronic atomizer during the use. Tactile (vibration) feedback is a new feedback mode which is different from auditory feedback and visual feedback. The vibration feedback not only enables the product to communicate with users flexibly in noisy and light-limited environments, but also improves monotonous operation experience caused by a current flat-touch-based operation manner. That is, the vibration feedback of the electronic atomizer not only conveys information to the users, but also enhances user experience.

A vibration mode may be divided into short vibration, fade-in vibration or fade-out vibration according to usage scenarios. Different vibration waveforms may bring different tactile effects to the users (such as Click, Pulse, Bump, Ramp up, Ramp down and other tactile effects, among which the Click vibration effect may have different vibration intensity such as strong, medium, weak, etc., a Click vibration duration may be short, long, longer, or other different time periods, and the different effects depend on different driving voltages and driving time). By adjusting the gain of a vibration waveform and changing a vibration amplitude of the linear motor, the vibration intensity of the linear motor can be changed. Different vibration modes in different scenarios can improve the users' comfort of use. For example, when a cartridge of the electronic atomizer is inserted and removed, the electronic atomizer may give a short vibration feedback, or when the users smoke the electronic atomizer, the vibration of the electronic atomizer may fade in until the users stop smoking the electronic atomizer. Rich vibration feedback enables the users to more intuitively obtain current usage feedback of the electronic atomizer, improving the users' comfort of use and practicability.

It may be understood that any vibration waveform (or wave function) may be split into a variety of basic waveforms (or basic functions). For example, a complex vibration waveform (or wave function) may be converted into a plurality of basic waveforms (or basic wave functions) by Fourier transform. The basic waveforms (or basic wave functions) may be sine waves with certain frequencies, amplitudes, and phases.

In one specific example, the vibration waveform data may be RAM mode vibration waveform data.

In the present application, the RAM mode vibration waveform data pre-stored in the driving chip includes dozens of different basic waveforms, such as a harmonic vibration waveform, a periodic vibration waveform, a composite vibration waveform, a damped vibration waveform, a sinusoidal scanning waveform, a narrow-band random waveform, and a broadband random waveform. The RAM mode vibration waveform data may be in the form of data arrays. The basic waveforms have different numbers in the RAM mode vibration waveform data. For example, Waveform No. 3 in the RAM mode vibration waveform data may be a sinusoidal waveform, and so on.

According to the electronic atomizer linear motor control method in the present application, the gain of a basic waveform can be adjusted according to the gain rule corresponding to a current vibration mode. The basic waveform is a waveform selected from pre-stored vibration waveform data that matches the current vibration mode, and configured in a register of the driving module. The basic waveform may have a preset gain. By adjusting the gain of the basic waveform according to the gain rule corresponding to the current vibration mode, a vibration amplitude of the linear motor can be changed, and a vibration waveform corresponding to the current vibration mode and called by the driving module of the electronic atomizer can be obtained to drive the linear motor of the electronic atomizer to vibrate according to the corresponding vibration mode, and the gain rule corresponding to the current vibration mode can be changed according to an actual requirement, so that the present application can provide a variety of rich vibration waveforms for vibration of the linear motor.

Moreover, in the present application, only one register of the driving module is required to be configured. For a basic waveform matching the current vibration mode in the register, a vibration waveform matching the current vibration mode can be obtained by adjusting the gain of the basic waveform according to the gain rule corresponding to the current vibration mode, so that the linear motor of the electronic atomizer can vibrate according to the vibration waveform matching the current vibration mode, and rich vibration waveforms can be obtained without the limitation of the number of registers of the driving module, saving a large number of resources.

In the present application, a vibration waveform called by the driving module of the electronic atomizer can be obtained by adjusting the gain of the basic waveform in the register of the driving module correspondingly according to the gain rule corresponding to the current vibration mode. That is, when the vibration waveform is required to be changed, only the gain of the basic waveform is required to be adjusted, so that the linear motor of the electronic atomizer can be driven to vibrate according to the corresponding vibration waveform. Changes in the vibration waveform in the RAM mode are no longer limited by the number of registers of the driving module of the motor. Rich vibration waveforms can be obtained only with one register, a rich motor vibration effect is achieved, resources are effectively saved, and users can more intuitively obtain current use feedback of the electronic atomizer, greatly improving practicability and the users' comfort of use.

According to the invention, as shown in FIG. 2, prior to the step 202 where the gain of a basic waveform is adjusted according to the gain rule corresponding to a current vibration mode, the method includes the following step.

In step 302, the register is initialized in the event that a vibration event of the electronic atomizer occurs at present, and the basic waveform matching the current vibration mode is selected from the vibration waveform data and configured in the register.

The vibration event of the electronic atomizer is an event that requires feedback vibration of the electronic atomizer, such as insertion and removal of the cartridge of the electronic atomizer or a user's smoking of the electronic atomizer. In different usage scenarios, different vibration events of the electronic atomizer can be triggered to provide different vibration modes. Different vibration modes of the linear motor can be obtained through different vibration waveforms provided by the driving module.

Specifically, when the vibration event of the electronic atomizer occurs currently, a register may be initialized first. The register may be a first register of the driving module. The vibration mode may also vary correspondingly in different usage scenarios of the electronic atomizer. When different vibration events of the electronic atomizer are triggered, a register is required to be initialized, and a waveform selected from vibration waveform data and matching the current vibration mode is re-configured in the register. That is, the first register is initialized first, and the basic waveform matching the current vibration mode is selected from the vibration waveform data and configured in the register. At the same time, a maximum amplitude and an initial output amplitude of the basic waveform may be set. The gain of the basic waveform is adjusted according to the gain rule corresponding to the current vibration mode, so as to obtain a vibration waveform called by the driving module of the electronic atomizer. The driving module calls the vibration waveform with the adjusted gain to drive the linear motor to vibrate. Vibration intensity of the linear motor may be adjusted from the initial output amplitude to the corresponding vibration intensity, and a maximum vibration amplitude of the linear motor may not exceed the maximum amplitude of the basic waveform, so as to realize rich vibration of the linear motor.

In one embodiment, the vibration waveform data may be RAM mode vibration waveform data. The gain rule may include periodically changing the gain of the basic waveform.

The gain rule corresponding to the current vibration mode may be set according to an actual requirement. The gain rule may include periodically changing the gain of the basic waveform, such as periodically increasing the gain of the basic waveform or periodically decreasing the gain of the basic waveform, so that the linear motor can output fade-in or fade-out continuously varying vibration, or first increasing the gain of the basic waveform and then decreasing the gain of the basic waveform, so that the linear motor can output vibration that first fades in and then fades out. The gain rule may be adjusted according to an actual requirement of the current vibration mode.

Specifically, the gain of the outputted vibration waveform may be changed periodically once every 10 ms or 30 ms. Each time 10 ms or 30 ms is up, the gain of the basic waveform in the register is changed. The interval time can realize delay of the vibration waveform, so that the linear motor can vibrate according to the vibration waveform with the changed gain. For example, in the case of the smoking of the electronic atomizer, when the linear motor is driven to vibrate, the gain of the basic waveform is increased every 10 ms or 30 ms, and a vibration waveform with a fade-in gain is obtained, so that the vibration of the linear motor can fade in during the smoking until the smoking of the electronic atomizer is stopped. By periodically changing the gain of the basic waveform, gradient vibration of the linear motor can be realized, and by adjusting corresponding gain rules in other different vibration modes, rich vibration of the linear motor can be realized.

In one embodiment, the gain does not exceed 128 dB; and/or a cycle during which the gain of the basic waveform is changed ranges from 10 ms to 30 ms.

In the present application, the gain rule corresponding to the current vibration mode may be set according to an actual situation. For the occurrence of vibration time in different scenarios, the electronic atomizer can perform vibration in different modes, and the gain rule may be adjusted accordingly. The gain of the basic waveform may be adjusted accordingly according to the gain rule corresponding to the current vibration mode. The gain does not exceed 128 dB; and/or a cycle during which the gain of the basic waveform is changed ranges from 10 ms to 30 ms. Specific parameters may be set according to an actual situation, so that the linear motor can vibrate according to rich vibration waveforms. The solution in the present application is simple and has high practicability.

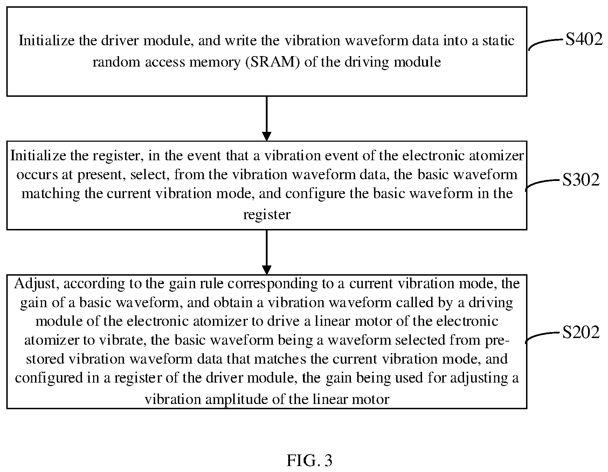

According to the invention, as shown in FIG. 3, prior to the step 302 where the register is initialized in the event that a vibration event of the electronic atomizer occurs at present, and the basic waveform matching the current vibration mode is selected from the vibration waveform data and configured in the register, the method includes the following step.

In step 402, the driving module is initialized, and the vibration waveform data is written into an SRAM of the driving module.

In one specific example, a maximum storage space of the SRAM may be 3k bytes.

Specifically, before the vibration event of the electronic atomizer occurs currently, the driving module may be initialized, and the RAM mode vibration waveform data including dozens of basic waveforms is written into the SRAM of the driving module, so that the basic waveform matching the current vibration mode can be found from the RAM mode vibration waveform data in the SRAM in time when the vibration event of the electronic atomizer occurs, so as to perform subsequent corresponding processing, which effectively improves a processing speed of the system, and can also provide rich vibration waveforms in time even in the case of fewer hardware resources of the electronic atomizer.

The operation of initializing the driving module and writing the RAM mode vibration waveform data into the SRAM of the driving module may be completed with the start of the electronic atomizer. The RAM mode vibration waveform data stored in the SRAM can be saved constantly provided that the SRAM of the driving module is on. Even if the SRAM is powered off and loses data, the driving module may also be initialized to re-write the RAM mode vibration waveform data in the SRAM of the driving module after the driving module is powered on normally, so as to ensure that the linear motor of the electronic atomizer can provide rich vibration waveforms.

Based on the above, in the present application, the driving module is initialized, and the RAM mode vibration waveform data is written into the SRAM of the driving module. When the vibration event of the electronic atomizer occurs currently, a register is initialized, a basic waveform matching the current vibration mode is selected from the RAM mode vibration waveform data and configured in the register, and the register is controlled to generate an initial vibration waveform with a preset maximum amplitude and a preset output amplitude. The gain of the basic waveform in the register is adjusted according to the gain rule corresponding to the current vibration mode, and a vibration waveform called by the driving module of the electronic atomizer is obtained to drive the linear motor of the electronic atomizer to vibrate. Thus, in the present application, different basic waveforms in different vibration modes can be provided, and by adjusting the gain of the basic waveform, a vibration amplitude of the motor is changed, and then vibration intensity of the motor is changed. The vibration waveform may be adjusted arbitrarily according to an actual requirement. Changes in the vibration waveform in the RAM mode are no longer limited by the number of registers of the driving module of the motor. Rich vibration waveforms can be obtained only with one register in the case of fewer hardware resources, a rich motor vibration effect is achieved, intuitive vibration feedback is given to the users, and practicability and use comfort of the product are greatly improved.

It should be understood that although the steps in the flowchart of FIG. 1 to FIG. 3 are shown in sequence as indicated by the arrows, the steps are not necessarily performed in the order indicated by the arrows. Unless otherwise clearly specified herein, the steps are performed without any strict sequence limitation, and may be performed in other orders. In addition, at least some steps in FIG. 1 to FIG. 3 may include a plurality of steps or a plurality of stages, and such steps or stages are not necessarily performed at a same moment, and may be performed at different moments. The steps or stages may be performed in turn or alternately with other steps or at least part of the steps or stages of other steps, rather than being necessarily performed sequentially.

In one embodiment, a device for controlling a linear motor of an electronic atomizer is provided, which may include a data processing module.

The data processing module is configured to adjust, according to the gain rule corresponding to a current vibration mode, the gain of a basic waveform, and obtain a vibration waveform called by a driving module of the electronic atomizer to drive a linear motor of the electronic atomizer to vibrate. The basic waveform is a waveform selected from pre-stored vibration waveform data that matches the current vibration mode, and configured in a register of the driving module. The gain is used for adjusting a vibration amplitude of the linear motor.

In one embodiment, the device may further include: a first data initialization module configured to initialize the register in the event that a vibration event of the electronic atomizer occurs at present, select, from the vibration waveform data, the basic waveform matching the current vibration mode, and configure the basic waveform in the register.

In one embodiment, the device may further include: a second data initialization module configured to initialize the driving module, and writing the vibration waveform data into an SRAM of the driving module.

In one embodiment, the vibration waveform data is RAM mode vibration waveform data.

The gain rule may include periodically changing the gain of the basic waveform.

In one embodiment, the gain does not exceed 128 dB; and/or a cycle during which the gain of the basic waveform is changed ranges from 10 ms to 30 ms.

Specific limitations on the electronic atomizer linear motor control apparatus may be obtained with reference to the limitations on the electronic atomizer linear motor control method hereinabove. Details are not described herein. The modules in the foregoing electronic atomizer linear motor control apparatus may be implemented entirely or partially by software, hardware, or a combination thereof. The above modules may be built in or independent of a processor of a computer device in a hardware form, or may be stored in a memory of the computer device in a software form, so that the processor invokes and performs operations corresponding to the above modules. It is to be noted that the division of the modules is merely schematic, which is merely a logical function division and may be another division in actual implementation.

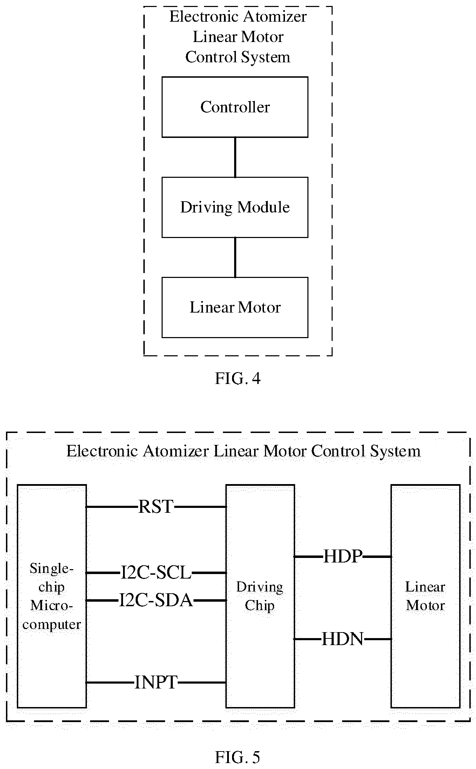

According to the invention, as shown in FIG. 4, a system for controlling a linear motor of an electronic atomizer (also shown as electronic atomizer linear motor control system) is provided, which includes: a driving module, a controller connected to the driving module and a linear motor connected to the driving module.

The controller is configured to perform the electronic atomizer linear motor control method described above.

The driving module may be a driving chip.

Specifically, when detecting that the vibration event of the electronic atomizer occurs currently, the controller selects, from RAM mode vibration waveform data pre-stored in the driving chip, the basic waveform matching the current vibration mode, and configures the basic waveform in the register of the driving chip. The driving chip may be provided with a plurality of registers, but only the basic waveform matching the current vibration mode is required to be configured in the first register of the driving chip. Moreover, the controller can adjust the gain of the basic waveform according to the gain rule corresponding to the current vibration mode and obtain a corresponding vibration waveform. At the same time, the controller can also send a vibration instruction to the driving chip to instruct the driving chip to call the vibration waveform, so as to drive the linear motor of the electronic atomizer to vibrate. Thus, the linear motor can vibrate according to the vibration waveform corresponding to the current vibration mode. The vibration waveform of the linear motor may vary in different vibration modes, so as to provide rich vibration feedback for the electronic atomizer in different application scenarios.

In one specific example, when the electronic atomizer is smoked currently, the single-chip microcomputer initializes the register of the driving chip, selects, from the RAM mode vibration waveform data, a basic waveform matching the current vibration mode, and configures the basic waveform in the register, and controls the register to generate an initial vibration waveform with a preset maximum amplitude and a preset output amplitude. The controller periodically increases the gain of the basic waveform according to the gain rule corresponding to the current vibration mode. That is, the gain of the basic waveform is increased at regular intervals (e.g., 10 ms or 30 ms). A vibration waveform called by the driving chip is obtained. The controller outputs a vibration instruction to the driving chip. The vibration waveform starts to play. The driving chip calls the vibration waveform to drive the linear motor to vibrate. Therefore, the linear motor increases the vibration amplitude at regular intervals. During the smoking of the electronic atomizer, the vibration fed back by the electronic atomizer fades in until the smoking of the electronic atomizer is stopped, and the controller outputs a vibration stop instruction to the driving chip to cause the linear motor to stop vibrating.

In the present application, the controller selects, from pre-stored RAM mode vibration waveform data, a basic waveform matching the current vibration mode, configures the basic waveform in one register of the driving module, adjusts the gain of the basic waveform according to the gain rule corresponding to the current vibration mode, and obtain a vibration waveform called by the driving module, so as to drive the linear motor of the electronic atomizer to vibrate. Thus, changes in the vibration waveform in the RAM mode adopted by the driving module in the present application are no longer limited by the number of registers of the driving module. Rich vibration waveforms can be obtained only with one register, a rich motor vibration effect is achieved, a large number of hardware resources are saved, and practicability is high.

In one embodiment, the controller is a single-chip microcomputer. The electronic atomizer linear motor control system may further include an RST rest driving chip and an I2C bus. The RST rest driving chip is connected to the controller and the driving module respectively. The controller is connected to the driving module through the I2C bus. An HDP pin of the driving module and an HDN pin of the driving module are connected to the linear motor.

The I2C bus may include an I2C-serial clock line (SCL) line and an I2C-serial data (SDA) line, as shown in FIG. 5.

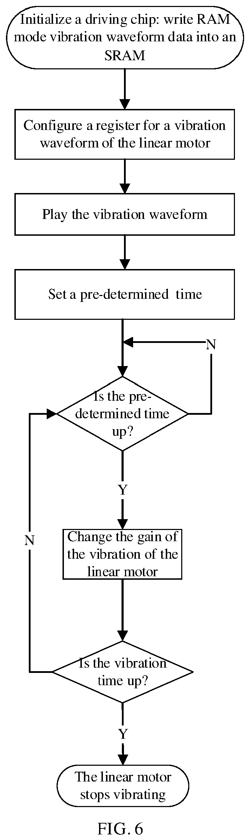

Specifically, as shown in FIG. 6, the single-chip microcomputer may reset the driving chip through the RST reset driving chip, and write the RAM mode vibration waveform data into an SRAM of the driving chip through the I2C bus. In the event that a vibration event of the electronic atomizer occurs at present, a register of the driving chip is initialized through the I2C bus, a basic waveform matching the current vibration mode is selected from the RAM mode vibration waveform data and configured in the register, and the register is controlled to generate an initial vibration waveform with a preset maximum amplitude and a preset output amplitude. At the same time, the single-chip microcomputer outputs a vibration start instruction to the driving chip. The register starts to play the vibration waveform. Moreover, the single-chip microcomputer adjusts the gain of the basic waveform according to the gain rule corresponding to the current vibration mode and obtain a vibration waveform called by the driving chip, causing the driving chip to drive, through an HDP pin and an HDN pin, the linear motor of the electronic atomizer to vibrate. That is, the single-chip microcomputer periodically changes the gain of the basic waveform at regular intervals, and then changes the gain of vibration of the motor, causing the linear motor to output fade-in or fade-out continuously varying vibration. When the vibration time of the current vibration mode is reached (in the case of the smoking of the electronic atomizer, the vibration time may be the total time of the smoking process, and the vibration time may be reached when the smoking action is stopped), the single-chip microcomputer outputs a vibration stop instruction to instruct the driving chip to stop driving the linear motor to vibrate.

Based on the above, in the present application, the single-chip microcomputer writes the RAM mode vibration waveform data into the SRAM of the driving module, and in the event that a vibration event of the electronic atomizer occurs at present, initializes the register of the driving module, selects, from the RAM mode vibration waveform data, a basic waveform matching the current vibration mode, and configures the basic waveform in the register, and adjusts the gain of the basic waveform according to the gain rule corresponding to the current vibration mode, so as to obtain a vibration waveform called by the driving module to drive the motor of the electronic atomizer to vibrate. In the present application, the RAM mode of the driving module can be adopted to acquire rich vibration waveforms and achieve rich motor vibration effects with fewer hardware resources of the electronic atomizer, which is no longer limited by the number of registers of the driving module and greatly enhances the practicability.

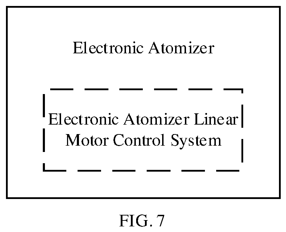

In one embodiment, as shown in FIG. 7, an electronic atomizer is provided, including the system described above.

The electronic atomizer in the present application can provide rich vibration waveforms in the case of fewer hardware resources. For example, in the case of insertion and removal of the cartridge of the electronic atomizer or smoking of the electronic atomizer, different vibration feedback is triggered, so that the users can more intuitively understand the use of the electronic atomizer, and the practicality and comfort are greatly enhanced.

In one embodiment, a computer-readable storage medium storing a computer program is provided. The computer program, when executed by a processor, causes the processor to implement steps in the method embodiments described above.

Those of ordinary skill in the art may understand that some or all procedures in the methods in the foregoing embodiments may be implemented by a computer program instructing related hardware, the program may be stored in a non-volatile computer-readable storage medium, and when the program is executed, the procedures in the foregoing method embodiments may be implemented. Any reference to the memory, storage, database, or other media used in the embodiments provided in the present application may include at least one of a non-volatile memory and a volatile memory. The non-volatile memory may include a Read-Only Memory (ROM), a magnetic tape, a floppy disk, a flash memory, an optical memory, or the like. The volatile memory may include an RAM or an external high-speed cache memory. By way of illustration instead of limitation, the RAM is available in a variety of forms, such as a static random access memory (SRAM) and a Dynamic random access memory (DRAM).

In the description of the specification, reference terms such as "some embodiments", "other embodiments", and "ideal examples" mean that a particular feature, structure, material, or characteristic described in connection with the embodiment or example is included in at least one embodiment or example of the present invention. In the specification, the schematic expressions to the above terms are not necessarily referring to the same embodiment or example.

For concise description, not all possible combinations of the technical features in the above embodiments are described. However, all the combinations of the technical features are to be considered as falling within the scope described in this specification provided that they do not conflict with each other.

The above embodiments only describe several implementations of the present application, and the description thereof is specific and detailed, but cannot therefore be understood as a limitation on the scope of the invention. It should be noted that those of ordinary skill in the art may further make variations and improvements without departing from the scope of the present invention as defined in the appended claims.

## Claims

1. A method for controlling a linear motor of an electronic atomizer, the method comprising:
initializing a driving module of the electronic atomizer, and writing vibration waveform data into a static random access memory, SRAM, of the driving module to generate pre-stored vibration waveform data (S402);
initializing a register of the driving module, in an event that a vibration event of the electronic atomizer occurs at present, wherein the vibration event of the electronic atomizer is an event that requires feedback vibration of the electronic atomizer, and wherein different vibration events are triggered to provide different vibration modes,
selecting, from the pre-stored vibration waveform data, a basic waveform matching a current vibration mode, configuring the basic waveform in the register (S302),
adjusting, according to a gain rule corresponding to the current vibration mode, the gain of the basic waveform, and
obtaining a vibration waveform called by the driving module of the electronic atomizer to drive a linear motor of the electronic atomizer to vibrate,
wherein the gain is used for adjusting a vibration amplitude of the linear motor (S202).

2. The method according to claim 1, wherein the vibration waveform data is random access memory, RAM, mode vibration waveform data; and
wherein the gain rule comprises periodically changing the gain of the basic waveform.

3. The method according to claim 2, wherein the gain does not exceed 128 dB.

4. The method according to claim 2, wherein a cycle during which the gain of the basic waveform is changed ranges from 10 ms to 30 ms.

5. A system for controlling a linear motor of an electronic atomizer, the system comprising: a driving module, a controller connected to the driving module and a linear motor connected to the driving module,
wherein the controller is configured to perform the method according to any one of claims 1 to 4.

6. An electronic atomizer, comprising the system according to claim 5.

7. A computer-readable storage medium, having stored thereon a computer program comprising instructions to cause the system of claim 5 to execute the steps of the method according to any one of claims 1 to 4.

## Patentansprüche

1. Verfahren zum Steuern eines Linearmotors eines elektronischen Zerstäubers, wobei das Verfahren umfasst:
Initialisieren eines Antriebsmoduls des elektronischen Zerstäubers und Schreiben von Vibrationswellenformdaten in einen statischen Direktzugriffsspeicher, SRAM, des Antriebsmoduls, um vorab gespeicherte Vibrationswellenformdaten zu erzeugen (S402);
Initialisieren eines Registers des Antriebsmoduls, falls derzeit ein Vibrationsereignis des elektronischen Zerstäubers vorliegt, wobei das Vibrationsereignis des elektronischen Zerstäubers ein Ereignis ist, das eine Vibrationsantwort des elektronischen Zerstäubers erfordert, und wobei verschiedene Vibrationsereignisse ausgelöst werden, um verschiedene Vibrationsmodi bereitzustellen,
Auswählen, aus den vorab gespeicherten Vibrationswellenformdaten, einer grundlegenden Wellenform, die mit einem aktuellen Vibrationsmodus übereinstimmt, Konfigurieren der grundlegenden Wellenform in dem Register (S302),
Anpassen, gemäß einer Verstärkungsregel, die dem aktuellen Vibrationsmodus entspricht, der Verstärkung der grundlegenden Wellenform und
Erhalten einer Vibrationswellenform, die von dem Antriebsmodul des elektronischen Zerstäubers aufgerufen wird, um einen Linearmotor des elektronischen Zerstäubers dazu anzutreiben zu vibrieren,
wobei die Verstärkung zum Anpassen einer Vibrationsamplitude des Linearmotors verwendet wird (S202).

2. Verfahren nach Anspruch 1, wobei die Vibrationswellenformdaten Direktzugriffsspeicher-, RAM-, modus-Vibrationswellenformdaten sind; und
wobei die Verstärkungsregel periodisches Ändern der Verstärkung der grundlegenden Wellenform umfasst.

3. Verfahren nach Anspruch 2, wobei die Verstärkung 128 dB nicht überschreitet.

4. Verfahren nach Anspruch 2, wobei ein Zyklus, während dem die Verstärkung der grundlegenden Wellenform geändert wird, eine Spanne von 10 ms bis 30 ms aufweist.

5. System zum Steuern eines Linearmotors eines elektronischen Zerstäubers, wobei das System aufweist: ein Antriebsmodul, eine mit dem Antriebsmodul verbundene Steuereinrichtung und einen mit dem Antriebsmodul verbundenen Linearmotor,
wobei die Steuereinrichtung dazu eingerichtet ist, das Verfahren nach einem der Ansprüche 1 bis 4 durchzuführen.

6. Elektronischer Zerstäuber, der das System nach Anspruch 5 aufweist.

7. Computerlesbares Speichermedium, auf dem ein Computerprogramm gespeichert ist, das Anweisungen umfasst, um zu bewirken, dass das System nach Anspruch 5 die Schritte des Verfahrens nach einem der Ansprüche 1 bis 4 ausführt.

## Revendications

1. Un procédé de commande d'un moteur linéaire d'un atomiseur électronique, le procédé comprenant:
l'initialisation d'un module d'entraînement de l'atomiseur électronique, et l'écriture de données de forme d'onde de vibration dans une mémoire vive statique, SRAM, du module d'entraînement pour générer des données de forme d'onde de vibration pré-stockées (S402);
l'initialisation d'un registre du module d'entraînement, dans un cas où un événement de vibration de l'atomiseur électronique se produit actuellement, dans lequel l'événement de vibration de l'atomiseur électronique est un événement qui nécessite une vibration en retour de l'atomiseur électronique, et dans lequel différents événements de vibration sont déclenchés pour fournir différents modes de vibration,
la sélection, à partir des données de forme d'onde de vibration pré-stockées, d'une forme d'onde de base correspondant à un mode de vibration actuel, la configuration de la forme d'onde de base dans le registre (S302),
l'ajustement, selon une règle de gain correspondant au mode de vibration actuel, du gain de la forme d'onde de base, et
l'obtention d'une forme d'onde de vibration appelée par le module d'entraînement de l'atomiseur électronique pour entraîner un moteur linéaire de l'atomiseur électronique à vibrer,
dans lequel le gain est utilisé pour l'ajustement d une amplitude de vibration du moteur linéaire (S202).

2. Le procédé selon la revendication 1, dans lequel les données de forme d'onde de vibration sont des données de forme d'onde de vibration en mode mémoire vive, RAM; et
dans lequel la règle de gain comprend la modification périodique du gain de la forme d'onde de base.

3. Le procédé selon la revendication 2, dans lequel le gain ne dépasse pas 128 dB.

4. Le procédé selon la revendication 2, dans lequel un cycle pendant lequel le gain de la forme d'onde de base est modifié est compris entre 10 ms et 30 ms.

5. Un système de commande d'un moteur linéaire d'un atomiseur électronique, le système comprenant: un module d'entraînement, un contrôleur connecté au module d'entraînement et un moteur linéaire connecté au module d'entraînement,
dans lequel le contrôleur est configuré pour exécuter le procédé selon l'une quelconque des revendications 1 à 4.

6. Un atomiseur électronique, comprenant le système selon la revendication 5.

7. Un support de stockage lisible par ordinateur, sur lequel est stocké un programme informatique comprenant des instructions permettant au système selon la revendication 5 d'exécuter les étapes du procédé selon l'une quelconque des revendications 1 à 4.
